# EUROPEAN PATENT APPLICATION

(11) **EP 4 787 049 A1**
(43) Date of publication of application: **05.08.2026**
(21) Application number: 23954656.7
(22) Date of filing: 15.12.2023
(51) Int. Cl.: G02B 27/01, G09G 5/12

(54) **BINOCULAR DISPLAY METHOD AND BINOCULAR DISPLAY DEVICE**

(30) Priority: 07.10.2023 WO PCT/CN2023/123275
(71) Applicant: SHENZHEN YIWEN TECH LIMITED, Guangdong 518000 (CN)
(72) Inventor: OUYANG, Jian, Shenzhen, Guangdong 518000 (CN)
(74) Representative: Agca Kizil, Tugce
(86) International application number: PCT/CN2023/139233
(87) International publication number: WO 2025/073144

(57) **Abstract**

Disclosed are a binocular display method and a binocular display device (100). The binocular display method is applied to the binocular display device (100) including a first display module (110) and a second display module (120), where a wireless communication connection is established between the first display module (110) and the second display module (120), and the binocular display device (100) is configured to display first binocular image information including first image information and second image information. The method includes: configuring the first image information on the first display module (110), and configuring the second image information on the second display module (120); and controlling the first display module (110) and the second display module (120) to perform image information display synchronously, where the first display module (110) displays the first image information, and the second display module (120) displays the second image information. In this way, the volume and size requirements of the binocular display device (100) are reduced while implementing imaging synchronization between the left and right sides of the binocular display device (100), thereby improving the user experience.

## Description

### Technical Field

The present application relates to the field of display devices, and in particular to a binocular display method and a binocular display device.

### Background Art

Augmented reality (AR) glasses are classified into two types: binocular display and monocular display. For AR glasses featuring binocular display, independent display modules are generally provided on the left and right sides of the glasses for imaging. Typically, a user's mobile phone sends image information to be displayed on the AR glasses to one of the display modules, and then the image information is communicated between the two display modules, enabling a match between imaging of the left and right display modules.

It should be noted that only when the imaging is synchronized between the left and right sides can the user's eyes properly process and fuse the images after receiving them. However, current AR glasses often experience a certain delay during imaging on the left and right sides, which affects the user experience. Therefore, how to enable imaging synchronization between the two display modules is a critical issue in improving the user experience.

Moreover, some AR glasses currently available on the market achieve synchronized imaging by using a solution of providing a data cable between the two display modules. To accommodate the data cable within the frame structure, the thickness and structure of the frame itself will be significantly increased, causing problems such as obstructed vision, cumbersome structure, and reduced portability.

### Summary of the Invention

Embodiments of the present application provide a binocular display method and a binocular display device, to prevent a timing mismatch between imaging of two display modules from causing improper fusion when a user is viewing images displayed by the device, implementing imaging synchronization between the left and right sides of the binocular display device, thereby improving the user experience.

In a first aspect, an embodiment of the present application provides a binocular display method, which is applied to a binocular display device. The binocular display device includes a first display module and a second display module, between which a wireless communication connection is established, and the binocular display device is configured to display first binocular image information including first image information for display on the first display module and second image information for display on the second display module. The method includes:
configuring the first image information on the first display module, and configuring the second image information on the second display module; and
controlling the first display module and the second display module to perform image information display synchronously, where the first display module displays the first image information, and the second display module displays the second image information.

In a second aspect, an embodiment of the present application provides a binocular display device including a first display module and a second display module communicatively connected to the first display module in a wireless manner.

The binocular display device is further provided with a controller configured to control the binocular display device to perform the binocular display method according to any one of the embodiments of the present application.

In summary, the embodiments of the present application provide the binocular display method and the binocular display device, where the binocular display method is applied to the binocular display device. The binocular display device includes the first display module and the second display module, between which a wireless communication connection is established, and the binocular display device is configured to display the first binocular image information including the first image information for display on the first display module and the second image information for display on the second display module. The method includes: configuring the first image information on the first display module, and configuring the second image information on the second display module; and controlling the first display module and the second display module to perform image information display synchronously, where the first display module displays the first image information, and the second display module displays the second image information. This prevents a timing mismatch between the imaging of the two display modules from causing improper fusion when a user is viewing images displayed by the device, implementing imaging synchronization between the left and right sides of the binocular display device, thereby improving the user experience.

### Brief Description of the Drawings

To describe the technical solutions in the embodiments of the present application more clearly, the accompanying drawings for describing the embodiments are described briefly below. It is clear that the accompanying drawings in the following description illustrate some embodiments of the present application. Those skilled in the art will appreciate that other drawings may be derived from these accompanying drawings without requiring inventive effort.
FIG. 1 is a modular structure diagram of an implementation of a binocular display device according to an embodiment of the present application;
FIG. 2 is a modular structure diagram of another implementation of a binocular display device according to an embodiment of the present application;
FIG. 3 is a schematic structural diagram of an implementation of a binocular display device according to an embodiment of the present application;
FIG. 4 is a schematic structural diagram of another implementation of a binocular display device according to an embodiment of the present application;
FIG. 5 is a schematic structural diagram of still another implementation of a binocular display device according to an embodiment of the present application;
FIG. 6 is a schematic flowchart of steps of a binocular display method according to an embodiment of the present application;
FIG. 7 is a comparison timetable of an implementation of a binocular display method according to an embodiment of the present application;
FIG. 8 is a comparison timetable of another implementation of a binocular display method according to an embodiment of the present application; and
FIG. 9 is a schematic flowchart of steps of another binocular display method according to an embodiment of the present application.

List of reference signs:
100. binocular display device; 110. first display module; 111. first optical engine; 112. first control module; 120. second display module; 121. second optical engine; 122. second control module; 130. optical waveguide lens; 131. first lens component; 132. second lens component; 133. coupled-in grating region; 134. coupled-out grating region; 140. power supply component; 150. sensing component; 160. master control module; 170. frame assembly; 180. controller; and 200. terminal device.

### Detailed Description of Embodiments

The technical solutions in the embodiments of the present application will be described below with reference to the accompanying drawings in the embodiments of the present application. It is clear that the embodiments described are some, rather than all, of the embodiments of the present application. Based on the embodiments of the present application, other embodiments obtained by those of ordinary skill in the art without involving any inventive effort shall fall within the scope of protection of the present application. The flowcharts shown in the accompanying drawings are merely examples for description; they do not necessarily include all content or operations/steps, nor they are necessarily performed in the order described. For example, some operations/steps may alternatively be split, combined, or partially combined, and therefore an actual order of execution may change depending on an actual situation.

Some implementations of the present application will be described in detail below with reference to the accompanying drawings. In the case of no conflict, the following embodiments and features in the embodiments may be combined with each other.

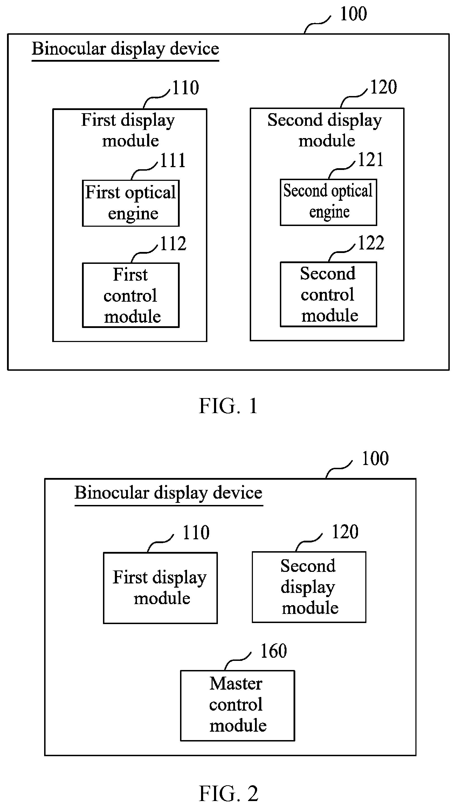

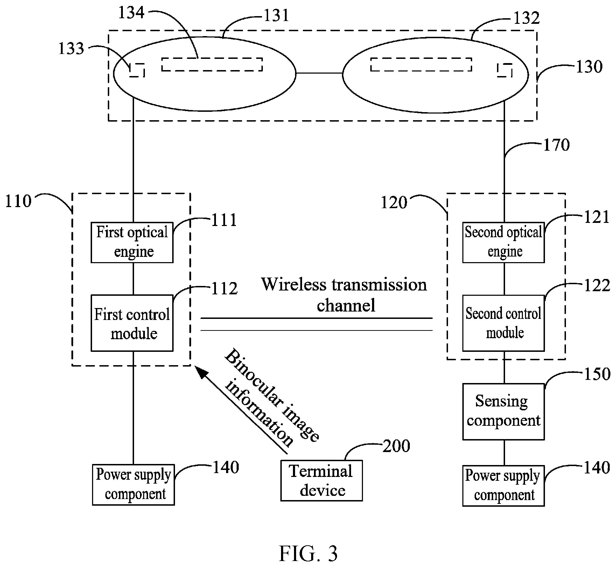

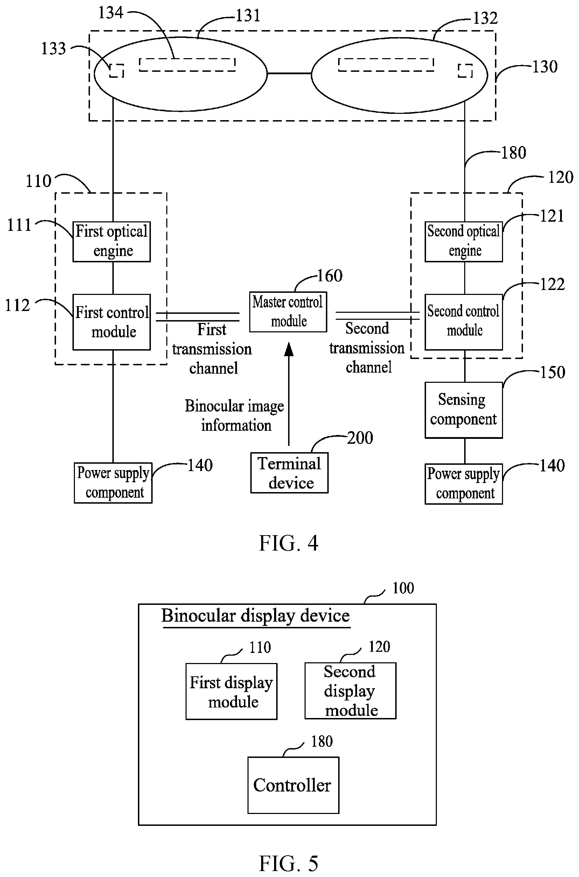

Referring to FIG. 1 to FIG. 4, FIG. 1 is a modular structure diagram of an implementation of a binocular display device according to an embodiment of the present application, FIG. 2 is a modular structure diagram of another implementation of a binocular display device according to an embodiment of the present application, FIG. 3 is a schematic structural diagram of an implementation of a binocular display device according to an embodiment of the present application, and FIG. 4 is a schematic structural diagram of another implementation of a binocular display device according to an embodiment of the present application.

As shown in FIG. 1 to FIG. 4, an embodiment of the present application provides a binocular display device 100. The binocular display device 100 includes at least a first display module 110 and a second display module 120, between which a wireless communication connection is established. The binocular display device 100 is configured to display first binocular image information including first image information for display on the first display module 110 and second image information for display on the second display module 120.

Specifically, when a user uses the binocular display device 100, the first display module 110 and the second display module 120 correspond to the left and right eyes of the user, respectively. After receiving images from the first display module 110 and the second display module 120, the user fuses the two images.

Specifically, the binocular display device 100 includes, but is not limited to, AR glasses featuring binocular display, or other electronic devices capable of binocular display.

In some implementations, the first display module 110 includes a first optical engine 111 and a first control module 112 configured to control the first optical engine 111 to output image information, and the second display module 120 includes a second optical engine 121 and a second control module 122 configured to control the second optical engine 121 to output image information. A wireless communication connection is established between the first control module 112 and the second control module 122.

As shown in FIG. 1 and FIG. 3, in some implementations, a wireless communication connection is directly established between the first display module 110 and the second display module 120.

In some implementations, the first display module 110 includes a first optical engine 111 and a first control module 112 configured to control the first optical engine 111 to output image information, and the second display module 120 includes a second optical engine 121 and a second control module 122 configured to control the second optical engine 121 to output image information. A wireless communication connection is established between the first control module 112 and the second control module 122.

Specifically, the form of the wireless communication connection between the first display module 110 and the second display module 120 includes, but is not limited to, an ultra-wideband (UWB) connection, a Bluetooth low-energy (BLE) connection, or a Wi-Fi connection. For example, a proprietary 2.4G wireless protocol is provided between the first display module 110 and the second display module 120 to provide data transmission support for the first display module 110 and the second display module 120.

Further, in the binocular display device 100, at least one of the first display module 110 and the second display module 120 may perform data transmission from or to a predetermined terminal device 200 to receive image information sent by the terminal device 200.

As shown in FIG. 2 and FIG. 4, in some implementations, the binocular display device 100 further includes a master control module 160. A wireless communication connection is established between the first control module 112 and the second control module 122 via the master control module 160. Specifically, a wireless communication connection is established between the master control module 160 and the first control module 112, and a wireless communication connection is established between the master control module 160 and the second control module 122.

Specifically, the form of the connection between the master control module 160 and the first display module 110 and/or the form of the connection between the master control module 160 and the second display module 120 includes, but is not limited to, a Bluetooth low-energy (BLE) connection or a Wi-Fi connection. For example, a proprietary 2.4G wireless protocol is provided between the first display module 110 and the second display module 120 to provide data transmission support for the first display module 110 and the second display module 120.

For example, the first control module 112 and/or the second control module 122 includes one of a central processing unit (CPU), another general-purpose processor, a digital signal processor, (DSP), an application-specific integrated circuit (ASIC), a field-programmable gate array (FPGA) or another programmable logic device, a discrete gate or transistor logic device, or a discrete hardware component.

For example, the first control module 112 in the first display module 110 may be mounted on a printed circuit board assembly (PCBA) and electrically connected to the first optical engine 111 to control the first optical engine 111. Similarly, the second control module 122 in the second display module 120 may be mounted on a printed circuit board assembly (PCBA) and electrically connected to the second optical engine 121 to control the second optical engine 121.

Referring to FIG. 5, FIG. 5 is a schematic structural diagram of still another implementation of a binocular display device 100 according to an embodiment of the present application.

As shown in FIG. 5, the binocular display device 100 is further provided with a controller 180. The controller 180 is configured to control the binocular display device 100 to perform the binocular display method according to any one of the embodiments of the present application.

Specifically, the controller 180 may be independently provided within both the first display module 110 and the second display module 120, or may be distributed between the first display module 110 and the second display module 120, or may be independently provided outside the first display module 110 and the second display module 120.

In some implementations, when the controller 180 is distributed between the first display module 110 and the second display module 120, the controller 180 may be configured to include the first control module 112 and the second control module 122. For the specific configurations of the first control module 112 and the second control module 122, reference may be made to the implementations described above and the description with regard to FIG. 1 to FIG. 4.

In some other implementations, the controller 180 includes the first control module 112, the second control module 122, and the master control module 160. For the specific configurations of the first control module 112, the second control module 122, and the master control module 160, reference may be made to the implementations described above and the description with regard to FIG. 1 to FIG. 4.

As shown in FIG. 3 and FIG. 4, in some implementations, the binocular display device 100 further includes a frame assembly 170, an optical waveguide lens 130, and a power supply component 140.

Specifically, the frame assembly 170 is at least configured to provide wearing support, and the first display module 110 and the second display module 120 are mounted in the frame assembly 170. The optical waveguide lens 130 is mounted on the frame assembly 170, and the optical waveguide lens 130 is provided with coupled-in grating regions 133 and coupled-out grating regions 134, the coupled-in grating regions 133 being disposed opposite to the first display module 110 and the second display module 120, where image signals input into the coupled-in grating regions 133 pass through the optical waveguide lens 130 and are output from the coupled-out grating regions 134. The power supply component 140 is mounted on the frame assembly 170, and is configured to supply power to the first display module 110 and the second display module 120.

It should be noted that the binocular display device 100, for example, is AR glasses, allowing the user to wear it using the frame assembly 170 of the binocular display device 100, and all components other than the frame assembly 170 in the binocular display device 100 can be mounted on the frame assembly 170.

In some implementations, the optical waveguide lens 130 includes a first lens component 131 and a second lens component 132 disposed on opposite sides of the frame assembly 170. When the user wears the binocular display device 100, the coupled-out grating regions 134 face the user's eyes, and image signals input by the first display module 110 and the second display module 120 into the coupled-in grating regions 133 pass through the optical waveguide lens 130, and are output from the coupled-out grating regions 134, and then projected into the user's field of view.

In some other implementations, the optical waveguide lens 130 includes an integral lens disposed on the frame assembly 170. When the user wears the binocular display device 100, the integral lens is located in front of the user's line of sight, while the coupled-out grating regions 134 are located on the integral lens.

As shown in FIG. 3 and FIG. 4, specifically, a first coupled-out grating region and a second coupled-in grating region are formed on the first lens component 131, and the first coupled-out grating region is disposed opposite to the first display module 110. A first coupled-out grating region and a second coupled-in grating region are formed on the first lens component 131, and the second coupled-out grating region is disposed opposite to the second display module 120. When the user wears the binocular display device 100, the first coupled-out grating region and the second coupled-out grating region are respectively opposite to the user's eyes. The image signal input by the first display module 110 into the first coupled-in grating region 133 passes through the optical waveguide lens 130 and is output from the first coupled-out grating region. Similarly, the image signal input by the second display module 120 into the second coupled-in grating region passes through the optical waveguide lens 130 and is output from the second coupled-out grating region. The image signals output from the first coupled-out grating region and the second coupled-out grating region are projected into the user's field of view.

In some implementations, the binocular display device 100 according to the embodiments of the present application is further provided with a sensing component 150 for detecting the device's own pose or the user's wearing condition.

For example, the sensing component 150 includes, but is not limited to, a gyroscope, a contact sensor, a gravity sensor (G-sensor), a microphone (mic) sensor, a photosensitive sensor, a proximity sensor, a camera, a ToF sensor, etc., where the gyroscope is configured to detect the amounts of displacement and rotation of the binocular display device 100. For example, the sensing component 150 includes, but is not limited to, a short-range inductive sensor. The short-range inductive sensor is configured to detect the user's wearing condition.

In some implementations, the sensing component 150 is connected to the first display module 110, in which case the sensing component 150 is configured to detect pose information of the binocular display device 100 and send the pose information to the first display module 110.

In some other implementations, the sensing component 150 is connected to the second display module 120, in which case the sensing component 150 is configured to detect pose information of the binocular display device 100 and send the pose information to the second display module 120.

In still other implementations, the sensing component 150 is connected to the master control module 160, in which case the sensing component 150 is configured to detect pose information of the binocular display device 100 and send the pose information to the master control module 160.

In the above-described implementations, upon obtaining the pose information and image information to be compensated, at least one of the first display module 110, the second display module 120, and the master control module 160 is further configured to perform image compensation on the image information to be compensated based on the pose information, and display a compensated image or configure the compensated image on the first display module 110 and/or the second display module 120 for display.

The image information to be compensated includes, but is not limited to, first binocular image information, the first image information, and the second image information, and the first binocular image information includes the first image information and the second image information.

In some implementations, the first control module 112 in the first display module 110 has a greater computing power than the second control module 122 in the second display module 120. In other words, the first control module 112 is a master chip, and the second control module 122 is a slave chip.

Further, for the sensing component 150, when the sensing component 150 includes a low-latency sensor, such as a gyroscope, a G-Sensor, or a camera, the sensing component 150 is disposed on a side close to the first display module 110 and is connected to the first display module 110, such that the first display module 110 having a greater computing power performs image compensation on the image information to be compensated based on the pose information. This enables the display of the compensated image to be triggered faster with less delay, thereby further improving the viewing experience of the user.

In addition, when the sensing component 150 includes a high-latency sensor, such as a mic sensor or a proximity sensor, because such a sensor has no significant low-latency requirement, the sensing component 150 may be disposed on a side close to the second display module 120 and is connected to the second display module 120, such that the second display module 120 performs image compensation on the image information to be compensated based on the pose information.

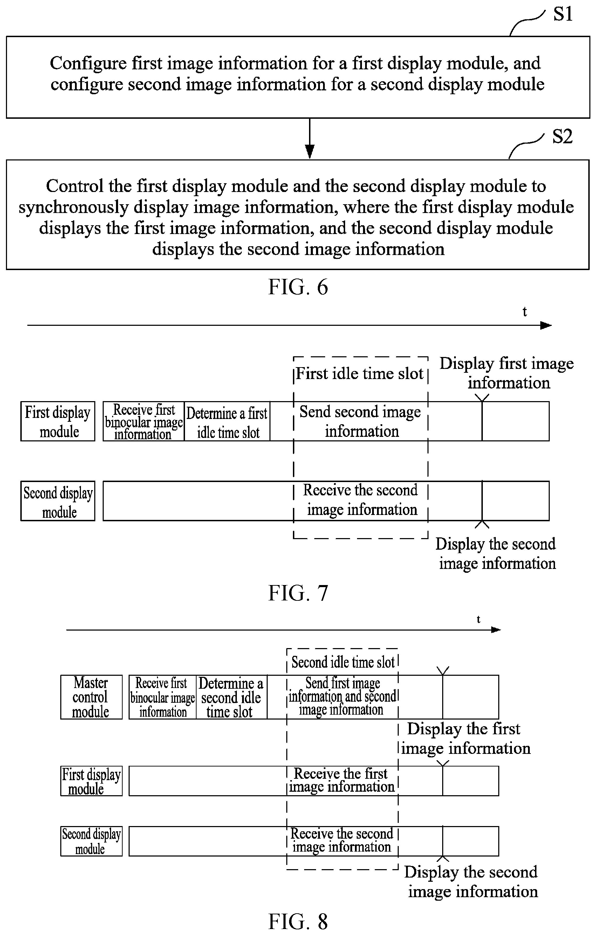

Referring to FIG. 6, FIG. 6 is a schematic flowchart of steps of a binocular display method according to an embodiment of the present application.

As shown in FIG. 6, an embodiment of the present application further provides a binocular display method. The binocular display method according to the embodiment of the present application is applied to a binocular display device 100. The binocular display device 100 includes a first display module 110 and a second display module 120, between which a wireless communication connection is established. The binocular display device 100 is configured to display first binocular image information including first image information for display on the first display module 110 and second image information for display on the second display module 120.

It should be noted that the binocular display device 100 includes, but is not limited to, AR glasses featuring binocular display, or other electronic devices capable of binocular display. A specific implementation in which the binocular display method is applied to the binocular display device 100 is described below with reference to the binocular display device 100 according to the embodiments of the present application.

It should be noted first that in all embodiments described in the specification of the present application, the term "synchronous/synchronization", including synchronous display, instruction synchronization, time information synchronization, and other phrases, refers to the relative consistency between the first display module 110 and the second display module 120 in the time dimension. It should be understood that due to external interference in actual signal transmission, the relative consistency between the first display module 110 and the second display module 120 in the time dimension is not equivalent to the absolute consistency therebetween; instead, there may be a time error of up to 1 microsecond in the synchronization between the first display module 110 and the second display module 120.

As shown in FIG. 6, the binocular display method specifically includes the following steps S1 and S2.

Step S1: Configure the first image information on the first display module 110, and configure the second image information on the second display module 120.

It should be understood that the first image information is used for display on the first display module 110, and the second image information is used for display on the second display module 120. Therefore, before respective image display is performed, it is necessary to configure the first image information on the first display module 110 and the second image information on the second display module 120.

In some implementations, before step S1 is performed, the method further includes: receiving first binocular image information including the first image information for display on the first display module 110 and the second image information for display on the second display module 120.

Specifically, the binocular display device 100 first receives the first binocular image information, where the first binocular image information may be image information sent by the terminal device 200 to the binocular display device 100, or may be image information generated by the binocular image display device based on the device's own pose or the user's wearing condition.

For example, the first binocular image information includes the first image information and the second image information. Preferably, the first image information and the second image information may be the same image information; that is, the first display module 110 and the second display module 120 display the same image information when the user uses the binocular display device 100. Therefore, the images entering the left and right eyes of the user are the same, and the user's eyes can properly process and fuse the images after receiving them. Alternatively, the first image information and the second image information may be different image information.

As shown in FIG. 3 and FIG. 4, for example, the binocular image display device detects the device's own pose or the user's wearing condition by using the sensing component 150, and sends pose information of the binocular image display device or the user's wearing condition to the binocular image display device.

In some implementations, receiving the first binocular image information may be specifically controlling one of the first display module 110 and the second display module 120 to obtain the first binocular image information.

It should be noted that the binocular display device 100 includes at least the first display module 110 and the second display module 120, and a direct wireless communication connection is established between the first display module 110 and the second display module 120.

Specifically, from the perspective of controlling the imaging of the two display modules, typically, only one of the first display module 110 and the second display module 120 is configured to be connected to the terminal device 200 and/or the sensing component 150 to obtain the binocular image information, and then send the corresponding image information in the binocular image information to the other of the first display module 110 and the second display module 120.

In some other implementations, in addition to the first display module 110 and the second display module 120, the binocular display device 100 further includes a master control module 160 communicatively connected to both the first display module 110 and the second display module 120 in a wireless manner. In this case, receiving the first binocular image information is specifically controlling the master control module 160 to obtain the first binocular image information.

Specifically, the master control module 160 is connected to the terminal device 200 and/or the sensing component 150 to obtain the binocular image information, and then sends the corresponding image information in the binocular image information to the first display module 110 and the second display module 120.

As shown in FIG. 3, in some implementations, the first display module 110 is configured to receive the first binocular image information. In step S1, configuring the second image information on the second display module 120 includes: controlling the first display module 110 to transmit the second image information to the second display module 120.

Further, in step S1, configuring the first image information on the first display module 110 includes: controlling the first display module 110 to determine the first image information from the first binocular image information, and temporarily storing the first image information in the first display module 110, such that the first display module 110 outputs the first image information at a target time, where the target time follows the completion of the configuration of the second image information on the second display module 120.

From the perspective of controlling the imaging of the two display modules, typically, only one of the first display module 110 and the second display module 120 is configured to be connected to the terminal device 200 or the sensing component 150 to obtain the binocular image information, and then send the corresponding image information in the binocular image information to the other of the two.

In the embodiments of the present application, the specific process of the binocular display method is described in detail by using a scenario in which the first display module 110 is configured to receive the first binocular image information, but the present application is not limited only to the scenario in which the first display module 110 is configured to receive the first binocular image information.

In some implementations, controlling the first display module 110 to transmit the second image information to the second display module 120 includes:
determining a first idle time slot in a wireless transmission channel between the first display module 110 and the second display module 120; and
controlling the first display module 110 to send the second image information to the second display module 120 within the first idle time slot.

It should be noted that based on the wireless communication connection between the first display module 110 and the second display module 120, a wireless transmission channel available for data transmission is established between the first display module 110 and the second display module 120, and a first idle time slot for transmitting the second image information can be determined from the wireless transmission channel, where the first idle time slot is a period of time, i.e., a time slot, during which the transmission channel is idle and available for data transmission.

In some implementations, determining the first idle time slot in the wireless transmission channel between the first display module 110 and the second display module 120 includes:
obtaining a data transmission time required for a preset data transmission over the wireless transmission channel; and
controlling the first display module 110 to determine the first idle time slot from the wireless transmission channel, where the first idle time slot has a time length greater than or equal to the data transmission time.

Specifically, performing the preset data transmission is specifically transmitting the first image information or the second image information over the wireless transmission channel, and the data transmission time may be calculated based on a transmission rate of the wireless transmission channel and a data amount of the image information. After the data transmission time is obtained, the first display module 110 is controlled to determine the first idle time slot from the wireless transmission channel, and apply for the first idle time slot to transmit the second image information to the second display module 120 within the first idle time slot.

It should be noted that the first idle time slot has a time length greater than or equal to the data transmission time, which ensures that the first display module 110 has sufficient time to send the second image information for display on the second display module 120 to the second display module 120, thereby preventing the first display module 110 and the second display module 120 from failing to display the image information synchronously.

In some implementations, obtaining the data transmission time required for the preset data transmission over the wireless transmission channel includes:
obtaining a transmission rate of the wireless transmission channel; and
determining the data transmission time based on the transmission rate of the wireless transmission channel and a data amount of preset data, where the preset data includes the first image information and/or the second image information.

It should be noted that the transmission rate of the wireless transmission channel may be determined in accordance with a wireless protocol on the wireless transmission channel, that is, may be the intrinsic transmission rate of the wireless transmission channel; or the first display module 110 may be controlled to transmit a set of test data to the second display module 120 over the wireless transmission channel, and then the transmission rate of the wireless transmission channel may be determined based on the time for the transmission and the data amount of the test data.

By determining the data transmission time based on the transmission rate and the data amount of the preset data, the time length of the first idle time slot can be accurately determined to ensure that the first display module 110 has sufficient time to send the second image information for display on the second display module 120 to the second display module 120.

In some implementations, determining the first idle time slot from the wireless transmission channel includes:
extracting, from the wireless transmission channel, at least one first candidate time slot that is idle and has a time length greater than or equal to the data transmission time, where different first candidate time slots correspond to different data transmission time points during data transmission from the first display module 110 to the second display module 120; and
selecting, from among the at least one first candidate time slot, the first idle time slot that meets a preset data transmission condition.

Specifically, the wireless transmission channel has a corresponding timeline, and the first candidate time slot is a period of time that is idle on the timeline and has a time length greater than or equal to the data transmission time.

It should be noted that any period on the timeline is either idle or active. The first candidate time slot is one or more time slots that can be occupied by the first display module 110 and used to transmit data to the second display module 120. Therefore, the first idle time slot can be selected from among the at least one first candidate time slot. When the first display module 110 transmits data to the second display module 120 within the first idle time slot, the first idle time slot is active.

In some implementations, the first idle time slot is the first candidate time slot that corresponds to the earliest data transmission time point during data transmission from the first display module 110 to the second display module 120 over the wireless transmission channel;
or the first idle time slot is the first candidate time slot corresponding to the shortest data transmission time during data transmission from the first display module 110 to the second display module 120 in the first candidate time slot.

Specifically, the preset data transmission condition may be the earliest data transmission time point. Therefore, the first idle time slot selected from among the at least one first candidate time slot is the first candidate time slot that corresponds to the earliest data transmission time point during data transmission from the first display module 110 to the second display module 120 over the wireless transmission channel.

In addition, in a case where the data transmission time point cannot be determined or the wireless transmission channel is abnormal, the preset data transmission condition may be the shortest data transmission time. Therefore, the first idle time slot selected from among the at least one first candidate time slot is the first candidate time slot corresponding to the shortest data transmission time during data transmission from the first display module 110 to the second display module 120 over the wireless transmission channel.

It should be understood that by first determining the first candidate time slot based on the time length and whether it is idle, and then selecting therefrom the first idle time slot that meets the preset data transmission condition, this ensures a stable transmission effect when the first display module 110 transmits data to the second display module 120 within the first idle time slot, and ensures that the first display module 110 has sufficient time to send the second image information for display on the second display module 120 to the second display module 120.

In some implementations, controlling the first display module 110 and the second display module 120 to synchronize the time slot information corresponding to the first idle time slot includes:
controlling the first display module 110 to generate time slot feedback based on the time slot information of the first idle time slot, and outputting the time slot feedback to the second display module 120, such that the second display module 120 performs a time slot information synchronization operation based on the time slot feedback.

Further, after the first idle time slot is determined, the method further includes:
controlling the first display module 110 and the second display module 120 to synchronize time slot information corresponding to the first idle time slot.

It should be understood that after determining the first idle time slot, it is further necessary to control the first display module 110 and the second display module 120 to synchronize the time slot information corresponding to the first idle time slot, such that the first display module 110 and the second display module 120 can perform image information transmission at a mutually determined time instant, thereby ensuring that the first display module 110 and the second display module 120 can display the image information synchronously.

Specifically, the time slot information corresponding to the first idle time slot is, for example, a time stamp or sequence number of the first idle time slot on the corresponding timeline, and the first display module 110 and the second display module 120 synchronize the corresponding time stamp or sequence number, such that the first display module 110 and the second display module 120 can perform image information transmission at the mutually determined time instant.

In some implementations, controlling the first display module 110 and the second display module 120 to synchronize the time slot information corresponding to the first idle time slot includes:
controlling the first display module 110 to generate time slot feedback based on the time slot information of the first idle time slot, and outputting the time slot feedback to the second display module 120, such that the second display module 120 performs a time slot information synchronization operation based on the time slot feedback.

Specifically, the second display module 120 performing the time slot information synchronization operation specifically includes: the second display module 120 parsing the time slot feedback to obtain the time slot information of the first idle time slot to implement synchronization of the time slot information.

Still further, the second display module 120 may generate corresponding response information based on the obtained time slot information and send the response information to the first display module 110. When the time slot feedback matches the response information, the first display module 110 can confirm that the first display module 110 and the second display module 120 have completed the synchronization of the time slot information corresponding to the first idle time slot, thereby proceeding with the subsequent data transmission.

As shown in FIG. 4, in some implementations, the binocular display device 100 further includes the master control module 160 communicatively connected to the first display module 110 and the second display module 120 in a wireless manner. The master control module 160 is configured to receive the first binocular image information. In step S1, configuring the first image information on the first display module 110, and configuring the second image information on the second display module 120 include:
controlling the master control module 160 to transmit the first image information to the first display module 110 and the second image information to the second display module 120.

In some implementations, controlling the master control module 160 to transmit the first image information to the first display module 110 and the second image information to the second display module 120 includes:
determining a second idle time slot based on a first transmission channel between the master control module 160 and the first display module 110 and a second transmission channel between the master control module 160 and the second display module 120, where the first transmission channel and the second transmission channel are both idle within the second idle time slot; and
controlling the master control module 160 to send the first image information to the first display module 110 and the second image information to the second display module 120 within the second idle time slot.

Specifically, based on the wireless communication connection between the master control module 160 and the first display module 110 and the wireless communication connection between the master control module 160 and the second display module 120, the first transmission channel available for data transmission is established between the master control module 160 and the first display module 110; and similarly, the second transmission channel available for image information transmission is established between the master control module 160 and the second display module 120.

On this basis, the second idle time slot for image information transmission can be determined based on timelines corresponding to the first transmission channel and the second transmission channel and information indicating whether they are idle, where the second idle time slot is a period of time during which the first transmission channel and the second transmission channel are both idle and available for data transmission. Thereafter, the master control module 160 is controlled to send the first image information to the first display module 110 and the second image information to the second display module 120 within the second idle time slot.

It should be noted that determining the second idle time slot based on both the first transmission channel and the second transmission channel is intended to ensure that the master control module 160 has sufficient time to transmit the corresponding image information to the first display module 110 and the second display module 120, and ensure that the first display module 110 and the second display module 120 can display the image information synchronously without compromising the imaging effect.

In some implementations, determining the second idle time slot based on the first transmission channel between the master control module 160 and the first display module 110 and the second transmission channel between the master control module 160 and the second display module 120 includes:
determining a third idle time slot in the first transmission channel;
determining a fourth idle time slot in the second transmission channel; and
determining the second idle time slot based on the third idle time slot and the fourth idle time slot, where the second idle time slot corresponds to an overlapping period between the third idle time slot and the fourth idle time slot.

In some implementations, determining the third idle time slot in the first transmission channel includes:
obtaining a first transmission time required for a preset data transmission over the first transmission channel; and
determining the third idle time slot from the first transmission channel, where the third idle time slot has a time length greater than or equal to the first transmission time.

Specifically, performing the preset data transmission is specifically transmitting the first image information or the second image information over the first transmission channel, and the first transmission time may be calculated based on a transmission rate of the first transmission channel and a data amount of the image information. After the data transmission time is obtained, the master control module 160 is controlled to determine the third idle time slot from the first transmission channel.

It should be noted that the third idle time slot has a time length greater than or equal to the data transmission time, which ensures that the master control module 160 has sufficient time to send corresponding image information to the second display module 120.

In some implementations, obtaining the first transmission time required for the preset data transmission over the first transmission channel includes:
obtaining a transmission rate of the first transmission channel; and
determining the first transmission time based on the transmission rate of the first transmission channel and a data amount of preset data, where the preset data includes the first image information and/or the second image information.

It should be noted that the transmission rate of the first transmission channel may be determined in accordance with a wireless protocol on the first transmission channel between the master control module 160 and the first display module 110, that is, may be the intrinsic transmission rate of the first transmission channel; the master control module 160 may be controlled to transmit a set of test data to the first display module 110 over the first transmission channel, and then the transmission rate of the first transmission channel may be determined based on the time for the transmission and the data amount of the test data.

By determining the data transmission time based on the transmission rate and the data amount of the preset data, the time length of the third idle time slot can be accurately determined to ensure that the master control module 160 has sufficient time to send the first image information for display on the first display module 110 to the first display module 110.

In some implementations, determining the third idle time slot from the first transmission channel includes:
extracting, from the first transmission channel, at least one second candidate time slot that is idle and has a time length greater than or equal to the first transmission time, where different second candidate time slots correspond to different data transmission time points during data transmission by the master control module 160; and
selecting, from among the at least one second candidate time slot, the third idle time slot that meets a preset data transmission condition.

Specifically, the first transmission channel has a corresponding timeline, and the second candidate time slot is a period of time that is idle on the timeline and has a time length greater than or equal to the data transmission time.

It should be noted that any period on the timeline is either idle or active. The second candidate time slot is one or more time slots that can be occupied by the master control module 160 and used to transmit data to the first display module 110. Therefore, the third idle time slot can be selected from among the at least one second candidate time slot. When the master control module 160 transmits data to the first display module 110 within the third idle time slot, the third idle time slot is active.

In some implementations, the third idle time slot is the second candidate time slot that corresponds to the earliest data transmission time point during data transmission from the master control module 160 to the first display module 110 over the first transmission channel.

Alternatively, the third idle time slot is the second candidate time slot corresponding to the shortest data transmission time during data transmission from the master control module 160 to the first display module 110 in the second candidate time slot.

Specifically, the preset data transmission condition may be the earliest data transmission time point. Therefore, the third idle time slot selected from among the at least one second candidate time slot is the second candidate time slot that corresponds to the earliest data transmission time point during data transmission from the master control module 160 to the first display module 110 over the first transmission channel.

In addition, in a case where the data transmission time point cannot be determined or the first transmission channel is abnormal, the preset data transmission condition may be the shortest data transmission time. Therefore, the third idle time slot selected from among the at least one second candidate time slot is the second candidate time slot corresponding to the shortest data transmission time during data transmission from the master control module 160 to the first display module 110 over the wireless transmission channel.

It should be understood that by first determining the second candidate time slot based on the time length and whether it is idle, and then selecting therefrom the third idle time slot that meets the preset data transmission condition, this ensures a stable transmission effect when the master control module 160 transmits data to the first display module 110 within the third idle time slot, and ensures that the master control module 160 has sufficient time to send the first image information for display on the first display module 110 to the first display module 110.

Similarly, for the specific process of steps for determining the fourth idle time slot in the second transmission channel, reference may be made to the embodiment for determining the third idle time slot in the first transmission channel, which will not be repeated herein.

After the third idle time slot in the first transmission channel and the fourth idle time slot in the second transmission channel are determined, the second idle time slot is determined based on the third idle time slot and the fourth idle time slot. It should be understood that the second idle time slot corresponds to an overlapping period between the third idle time slot and the fourth idle time slot; that is, the first transmission channel and the second transmission channel are both idle within the second idle time slot.

On this basis, the overlapping period between the third idle time slot and the fourth idle time slot may be used as the second idle time slot, or a sub-period of the overlapping period between the third idle time slot and the fourth idle time slot may be used as the second idle time slot.

It should be noted that when determining the second idle time slot based on the third idle time slot and the fourth idle time slot, it is further necessary to ensure that the second idle time slot has a time length greater than or equal to the time for the control module to transmit data to the first display module 110 and the second display module 120, to ensure that the master control module 160 has sufficient time to send the corresponding image information to the first display module 110 and the second display module 120.

In some implementations, configuring the first image information on the first display module 110 includes:
controlling the first display module 110 to obtain the first image information from a predetermined terminal device 200 through at least one of wireless communication and wired communication;
   and/or
configuring the second image information on the second display module 120 includes:
   controlling the second display module 120 to obtain the second image information from a predetermined terminal device 200 through at least one of wireless communication and wired communication.

Specifically, configuring the first image information on the first display module 110 may be communicatively connecting the first display module 110 to the predetermined terminal device 200 in a wireless or wired manner, and then controlling the terminal device 200 to transmit the first image information to the first display module 110, to pre-store the first image information on the first display module 110.

Similarly, configuring the second image information on the second display module 120 may be communicatively connecting the first display module 110 to the predetermined terminal device 200 in a wireless or wired manner, and then controlling the terminal device 200 to transmit the first image information to the first display module 110, to pre-store the first image information on the first display module 110.

Based on the above-described configuration method, the configuration of the image information can be completed in advance. When the first binocular image information needs to be displayed, it is only necessary to send a display instruction to the first display module 110 and/or the second display module 120, such that the first display module 110 and/or the second display module 120 presents the corresponding image information in response to the display instruction. This increases the speed at which the binocular display device 100 displays the first binocular image information in response to the instruction.

It should be noted that the first image information and the second image information include, but are not limited to, one of image information, text information, interface information, or other information. For example, upon receiving a display instruction issued by the user, the binocular display image can present interface information corresponding to the display instruction to the user in the first binocular image information.

In some implementations, controlling the first display module 110 and the second display module 120 to perform the image information display synchronously includes:
controlling the first display module 110 and the second display module 120 to synchronize a display time instant, where the display time instant follows the completion of the configuration of the first image information and the second image information; and
controlling the first display module 110 to display the first image information at the display time instant, and controlling the second display module 120 to display the second image information at the display time instant.

Specifically, to implement imaging synchronization between the left and right sides of the binocular display device 100, the display time instant for the first display module 110 and the second display module 120 needs to be synchronized before the image information is presented, and the display time instant follows the completion of the configuration of the first image information and the second image information. It should be understood that the display time instant is the time instant at which the first display module 110 displays the first image information and the time instant at which the second display module 120 displays the second image information.

For example, controlling the first display module 110 and the second display module 120 to synchronize the display time instant may be: controlling one of the first display module 110 and the second display module 120 to send information carrying the display time instant to the other of the first display module and the second display module.

In some implementations, controlling the first display module 110 and the second display module 120 to perform the image information display synchronously includes:
controlling, after at least one of the first display module 110 and the second display module 120 receives a display instruction matching the first binocular image information, the first display module 110 and the second display module 120 to synchronize a display time instant based on the display instruction, where the display time instant follows the completion of the configuration of the first image information and the second image information; and
controlling the first display module 110 to display the first image information at the display time instant, and controlling the second display module 120 to display the second image information at the display time instant.

It should be noted that the display time instant for synchronous display of the first display module 110 and the second display module 120 may be any time following the completion of the configuration of the first image information and the second image information. In this implementation, the display time instant is determined based on the indication of the display instruction.

For example, upon receiving the display instruction matching the first binocular image information, at least one of the first display module 110 and the second display module 120 parses the display instruction to determine the display time instant corresponding to the display instruction, to implement intelligent control over the display time of the first binocular image information.

In some implementations, the binocular display method according to the embodiment of the present application further includes:
performing detection on display instructions respectively received by the first display module 110 and the second display module 120; and
skipping controlling the first display module 110 and the second display module 120 to perform image information display synchronously if the display instructions respectively received by the first display module 110 and the second display module 120 do not match.

Specifically, after both the first display module 110 and the second display module 120 receive the display instructions that match the first binocular image information, if it is detected that the display instructions respectively received by the first display module 110 and the second display module 120 do not match, the first display module 110 and the second display module 120 are not controlled to perform the image information display synchronously. Only when it is detected that the display instructions respectively received by the first display module 110 and the second display module 120 match, the first display module 110 and the second display module 120 are controlled to synchronously perform the image information display normally.

It should be noted that when the display instructions do not match, for example, it means that the display instructions received by the first display module 110 and the second display module 120 correspond to different display time instants, or image information indicated by the display instructions indicate does not match.

When the display instructions do not match, the first display module 110 and the second display module 120 are not controlled to perform the image information display synchronously. For example, if the display instructions received by the first display module 110 and the second display module 120 correspond to different display time instants, the first display module 110 and the second display module 120 are first controlled to synchronize the display time instant, and then perform synchronous display at the display time instant. For another example, if the image information indicated by the display instructions received by the first display module 110 and the second display module 120 does not match, only one of the first display module 110 and the second display module 120 may be controlled to perform display while the other does not perform display, or the first display module 110 and the second display module 120 are first controlled to synchronize the image information to be displayed, and then perform synchronous display at the display time instant.

Performing the detection on the display instructions respectively received by the first display module 110 and the second display module 120 can effectively avoid improper fusion when the user is viewing the images displayed by the device.

In some implementations, a target display module is switchable between a first operating mode and a second operating mode, where communication performance of the target display module in the first operating mode is higher than that in the second operating mode, and the target display module includes at least one of the first display module 110 and the second display module 120.

Accordingly, the binocular display method according to the embodiment of the present application further includes the following step:
configuring a current operating mode of the target display module to be the first operating mode or the second operating mode based on an information attribute of the first binocular image information before configuring the first image information and the second image information.

It should be noted that the target display module has different communication performance, that is, different rates for data transmission, in different operating modes. When synchronous binocular display is not required on the binocular display device 100, a low-power wireless communication connection, such as BLE communication, may be maintained between the first display module 110 and the second display module 120, and/or between the master control module 160 and the first display module 110, and/or between the master control module 160 and the second display module 120. In this case, the corresponding display module may enter the second operating mode. The low-power wireless communication connection is mainly used for the synchronization of a small amount of data or non-real-time data. When high-speed data transmission or synchronous binocular display is required, a high-speed high-power transmission channel may be used to establish a wireless communication connection between the corresponding master control module 160 and/or display module. In this case, the corresponding display module may enter the first operating mode.

On this basis, the current operating mode of the target display module is configured to be the first operating mode or the second operating mode based on the information attribute of the first binocular image information before the first image information and the second image information are configured.

For example, when the information attribute of the first binocular image information meets a preset attribute condition, it is determined that high-speed data transmission or synchronous binocular display is required on the binocular display device 100, and then the current operating mode of the target display module is configured to be the first operating mode.

It is further noted that, communication performance of the target display module in the first operating mode is higher than that in the second operating mode; and correspondingly, power consumption of the target display module in the first operating mode is higher than that in the second operating mode. Therefore, from the perspective of conserving battery power of the binocular display device 100, only when high-speed data transmission and/or synchronous binocular display is required on the master control module 160, a high-speed high-power transmission channel may be used to establish a wireless communication connection between the corresponding master control module 160 and/or display module.

Specifically, by using an example in which the binocular display method is applied to the binocular display device 100 and the binocular display device 100 is AR glasses, configuring the current operating mode of the target display module to be the first operating mode or the second operating mode based on the information attribute of the first binocular image information enables intelligent switching between the two operating modes to optimize the operational power consumption of the binocular display device 100 and reduce the volume and weight of the battery, resulting in a more lightweight structural design of the AR glasses.

In some implementations, the information attribute includes an information capacity value, and configuring the current operating mode of the target display module to be the first operating mode or the second operating mode based on the information attribute of the first binocular image information includes:
determining whether the information capacity value of the first binocular image information exceeds a preset value; and
configuring the current operating mode of the target display module to be the first operating mode when the information capacity value of the first binocular image information exceeds the preset value; or
configuring the current operating mode of the target display module to be the second operating mode when the information capacity value of the first binocular image information does not exceed the preset value.

Specifically, if the information capacity value of the first binocular image information is greater than the preset value, it is determined that high-speed data transmission is required on the binocular display device 100 to ensure synchronous display of the first display module 110 and the second display module 120. In this case, the current operating mode of the target display module is configured to be the first operating mode. Conversely, if the information capacity value of the first binocular image information is less than or equal to the preset value, it is determined that the binocular display device 100 can maintain a low-power wireless communication connection. In this case, the current operating mode of the target display module is configured to be the second operating mode.

Specifically, determining whether the information capacity value of the first binocular image information exceeds the preset value and configuring the operating mode may be performed by the master control module 160, or may be performed by at least one of the first display module 110 and the second display module 120. For example, when the master control module 160 is an execution entity, the master control module 160 obtains the first binocular image information and parses the first binocular image information to determine whether the information capacity value of the first binocular image information exceeds the preset value, and sends a first indication signal to the target display module to instruct the target display module to configure the current operating mode to be the first operating mode when the information capacity value of the first binocular image information exceeds the preset value, or sends a second indication signal to the target display module to instruct the target display module to configure the current operating mode to be the second operating mode when the information capacity value of the first binocular image information does not exceed the preset value.

In some implementations, the method further includes:
controlling, after the target display module in the second operating mode has configured corresponding image information, the target display module to switch the second operating mode to the first operating mode.

Specifically, controlling the target display module to switch the second operating mode to the first operating mode after the completion of the configuration of the corresponding image information enables intelligent switching between the two operating modes to optimize the operational power consumption of the binocular display device 100, thereby conserving battery power.

Step S2: Control the first display module 110 and the second display module 120 to perform image information display synchronously, where the first display module 110 displays the first image information, and the second display module 120 displays the second image information.

Specifically, the first display module 110 and the second display module 120 may simultaneously display the corresponding image information at an end time of the first idle time slot, or may simultaneously display the corresponding image information at a preset time following the end of the first idle time slot.

In some implementations, before the first display module 110 and the second display module 120 are controlled to perform the image information display synchronously, the method further includes: controlling the first display module 110 and the second display module 120 to synchronize a display time corresponding to the first binocular image information.

For example, the operations described above are performed by the master control module 160. After determining the second idle time slot, the master control module 160 determines display time information based on the second idle time slot, and sends the display time information to the first display module 110 and the second display module 120, such that the first display module 110 and the second display module 120 determine the display time corresponding to the first binocular image information based on the display time information.

Referring to FIG. 7, FIG. 7 is a comparison timetable of an implementation of a binocular display method according to an embodiment of the present application.

As shown in FIG. 7, in some implementations, the first display module 110 is configured to receive the first binocular image information. Accordingly, controlling the first display module 110 and the second display module 120 to perform the image information display synchronously includes:
controlling the first display module 110 to display the first image information at an end time of the first idle time slot, and controlling the second display module 120 to display the second image information at the end time of the first idle time slot;
or controlling the first display module 110 to display the first image information at a preset time following the first idle time slot, and controlling the second display module 120 to display the second image information at the preset time following the first idle time slot.

Specifically, if the first display module 110 is configured to receive the first binocular image information, the first display module 110 is controlled to send the second image information to the second display module 120 within the first idle time slot, and the first display module 110 and the second display module 120 are controlled to respectively display the first image information and the second image information at the same time instant, where the time at which the first display module 110 and the second display module 120 synchronously display the image information necessarily follows the first idle time slot to ensure that the first display module 110 has sufficient time to send the second image information to the second display module 120, enabling the first display module 110 and the second display module 120 to display matching image information synchronously.

Referring to FIG. 8, FIG. 8 is a comparison timetable of another implementation of a binocular display method according to an embodiment of the present application.

As shown in FIG. 8, in some implementations, the master control module 160 is configured to receive the first binocular image information. Accordingly, controlling the first display module 110 and the second display module 120 to perform the image information display synchronously includes:
controlling the first display module 110 to display the first image information at an end time of the second idle time slot, and controlling the second display module 120 to display the second image information at the end time of the second idle time slot;
or controlling the first display module 110 to display the first image information at a preset time following the second idle time slot, and controlling the second display module 120 to display the second image information at the preset time following the second idle time slot.

Similarly, if the master control module 160 is configured to receive the first binocular image information, the master control module 160 is controlled to send the first image information to the first display module 110 and the second image information to the second display module 120 within the second idle time slot, and the first display module 110 and the second display module 120 are controlled to respectively display the first image information and the second image information at the same time instant, where the time at which the first display module 110 and the second display module 120 synchronously display the image information necessarily follows the second idle time slot to ensure that the master control module 160 has sufficient time to send the corresponding image information, enabling the first display module 110 and the second display module 120 to display matching image information synchronously.

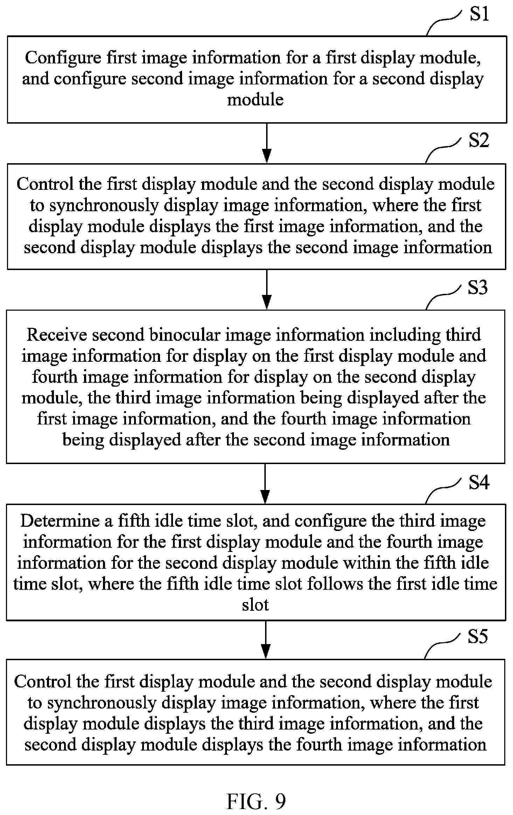

Referring to FIG. 9, FIG. 9 is a schematic flowchart of steps of another binocular display method according to an embodiment of the present application.

As shown in FIG. 9, in some implementations, after steps S1 and S2 are performed, the binocular display method further includes steps S3 to S5.

Step S3: Receive second binocular image information including third image information for display on the first display module 110 and fourth image information for display on the second display module 120, the third image information being displayed after the first image information, and the fourth image information being displayed after the second image information.

Step S4: Determine a fifth idle time slot, and configure the third image information on the first display module 110 and the fourth image information on the second display module 120 within the fifth idle time slot, where the fifth idle time slot follows the first idle time slot.

Step S5: Control the first display module 110 and the second display module 120 to perform image information display synchronously, where the first display module 110 displays the third image information, and the second display module 120 displays the fourth image information.

The second binocular image information is image information that the binocular display device 100 needs to display after displaying the first binocular image information, where the second binocular image information includes the third image information for display on the first display module 110 and the fourth image information for display on the second display module 120.

Specifically, similarly to the first idle time slot, the fifth idle time slot is a period of time during which the corresponding transmission channel is idle and available for data transmission, and the fifth idle time slot follows the first idle time slot. For the specific process of steps for determining the fifth idle time slot, reference may be made to the embodiment for determining the first idle time slot, which will not be repeated herein.

It should be noted that the binocular display device 100 may continuously receive a plurality of pieces of binocular image information during actual use. For example, during the configuration of the first image information and the second image information in the first binocular image information, if the binocular display device 100 receives the second binocular image information, the fifth idle time slot following the end of the first idle time slot is determined, and then the third image information is configured on the first display module 110 and the fourth image information is configured on the second display module 120 within the fifth idle time slot.

It should be understood that setting the fifth idle time slot to follow the end of the first idle time slot is intended to ensure that each idle time slot is independent of each other, preventing mutual interference during the configuration of different image information, thereby ensuring the stability of the configuration of each piece of image information.

Further, when the binocular display device 100 receives an n^{th} piece of binocular image information, a corresponding idle time slot is determined, and the idle time slot corresponding to the n^{th} piece of binocular image information needs to follow an idle time slot corresponding to an (n-1)^{th} piece of binocular image information, where n is an integer greater than or equal to 2.

In some implementations, after the end of the first idle time slot, the binocular display device 100 determines the fifth idle time slot, and configures the third image information on the first display module 110 and the fourth image information on the second display module 120 within the fifth idle time slot.

In some implementations, the determined fifth idle time slot needs to satisfy the following: a time difference between a start instant of the fifth idle time slot and a start instant of the first idle time slot being greater than a preset configuration time threshold. It should be understood that when the time for the binocular display device 100 to configure the binocular image information is less than or equal to the configuration time threshold, setting the time difference between the start instant of the fifth idle time slot and the start instant of the first idle time slot greater than the preset configuration time threshold can ensure that each idle time slot is independent of each other, preventing mutual interference during the configuration of different image information, thereby ensuring the stability of the configuration of each piece of image information.

It should be noted that by using an example in which the binocular display device 100 is AR glasses, when the user wears the AR glasses, the position of the AR glasses is fixed relative to human eyes. Therefore, when the user's head shakes and moves, images displayed on the AR glasses will also shake and move along with the user's head, causing the user to experience dizziness when the user is reading the image information.

In view of this, in some implementations, the binocular display method according to the embodiment of the present application further includes:
obtaining pose information of the binocular display device 100; and
controlling the first display module 110 and/or the second display module 120 to perform image compensation on the first image information and the second image information based on the pose information, such that the first display module 110 and the second display module 120 synchronously display the image information after the image compensation.

Specifically, the first display module 110 and/or the second display module 120 performing the image compensation on the first image information and the second image information based on the pose information specifically includes: determining a displacement amount and a rotation amount of the binocular display device 100 based on the pose information, calling a preset image compensation algorithm, and performing the image compensation on the first image information and the second image information based on the displacement amount, the rotation amount, and the image compensation algorithm. Performing the image compensation on the first image information and the second image information is specifically adjusting a relative position of a single pixel in the image information relative to the entire image based on the displacement amount and the rotation amount.

By performing the image compensation on the first image information and the second image information based on the pose information, it is effective to mitigate imaging jitter caused when the user walks or shakes their head while wearing the binocular display device 100, and prevent the user from feeling dizzy, thereby achieving a good anti-jitter and anti-interference effect.

As shown in FIG. 1, in some implementations, the binocular display device 100 further includes a sensing component 150 configured to obtain the pose information of the binocular display device 100.

For example, the pose information includes at least the displacement amount and the rotation amount of the binocular display device 100.

For example, the first display module 110 is configured to obtain a first binocular image and first pose information, and the first display module 110 is configured to perform image compensation on the first image information and the second image information. The first display module 110 is controlled to perform image compensation on the first image information and the second image information, and the first display module 110 sends the second image information after the image compensation to the second display module 120 within the first idle time slot, such that the first display module 110 and the second display module 120 synchronously display the image information after the image compensation.

As shown in FIG. 3 and FIG. 4, in some implementations, the binocular display method according to the embodiment of the present application further includes:
controlling the first display module 110 to obtain the pose information, and controlling the first display module 110 to perform the image compensation on the first image information based on the pose information; and
controlling the first display module 110 to send the pose information to the second display module 120, such that the second display module 120 performs the image compensation on the second image information based on the pose information.

Specifically, the first display module 110 is configured to obtain the pose information, perform the image compensation on the first image information based on the pose information, and send the pose information and the second image information to the second display module 120, such that the second display module 120 performs the image compensation on the second image information. For example, in FIG. 3 and FIG. 4, the sensing component 150 is disposed on a side of the binocular display device 100 close to the first display module 110 and is connected to the first display module 110. In this case, the sensing component 150 is configured to detect pose information of the binocular display device 100 and send the pose information to the first display module 110.

In some implementations, the method further includes:
controlling the second display module 120 to obtain the pose information, and controlling the second display module 120 to perform the image compensation on the second image information based on the pose information; and
controlling the second display module 120 to send the pose information to the first display module 110, such that the first display module 110 performs the image compensation on the first image information based on the pose information.

It should be understood that it is also possible that the second display module 120 obtains the pose information and sends the pose information to the first display module 110. For example, when the sensing component 150 is disposed on a side of the binocular display device 100 close to the second display module 120, the sensing component 150 is configured to detect pose information of the binocular display device 100 and send the pose information to the second display module 120.

In some implementations, the binocular display device 100 further includes a master control module 160 communicatively connected to the first display module 110 and the second display module 120 in a wireless manner, and the method further includes:
controlling the master control module 160 to obtain the pose information, and controlling the second display module 120 to perform the image compensation on the first image information and the second image information based on the pose information; and
sending the compensated first image information to the first display module 110, and sending the compensated second image information to the second display module 120.

In some implementations, the binocular display device 100 is further provided with the sensing component 150 configured to obtain the pose information of the binocular display device 100, and the method further includes:
controlling the sensing component 150 to send the obtained pose information to the first display module 110 and the second display module 120, such that the first display module 110 performs image compensation on the first image information based on the pose information and the second display module 120 performs image compensation on the second image information based on the pose information.

Specifically, the sensing component 150 is configured to obtain the pose information, and the sensing component 150 is controlled to send the pose information to the first display module 110 and the second display module 120, such that the first display module 110 and the second display module 120 respectively perform corresponding image compensation on the first image information and the second image information.

It should be noted that the above-described implementations are merely some examples of image compensation for the first image information and the second image information, and are not limitations on the position of the sensing component 150 and the entity for performing the image compensation.

In summary, the embodiment of the present application provides the binocular display method, which is applied to the binocular display device. The binocular display device includes the first display module and the second display module, between which a wireless communication connection is established, and the binocular display device is configured to display the first binocular image information including the first image information for display on the first display module and the second image information for display on the second display module. The method includes: configuring the first image information on the first display module, and configuring the second image information on the second display module; and controlling the first display module and the second display module to perform image information display synchronously, where the first display module displays the first image information, and the second display module displays the second image information. According to the embodiment of the present application, by communicatively connecting the two display modules in a wireless manner, the volume and size requirements of the binocular display device are reduced while implementing imaging synchronization between the left and right sides of the binocular display device. In addition, this effectively prevents a timing mismatch between the imaging of the two display modules from causing improper fusion when the user is viewing the images displayed by the device, thereby greatly improving the user experience.

Those of ordinary skill in the art can understand that all or some of the steps in the method and the functional modules/units in the system and apparatus disclosed above may be implemented as software, firmware, hardware, and appropriate combinations thereof. In a hardware embodiment, the division of the functional modules/units mentioned in the above description does not necessarily correspond to the division of physical components. For example, one physical component may have multiple functions, or one function or step may be jointly performed by several physical components. Some or all of the physical components may be implemented as a processor, or may be implemented as hardware or a setting circuit such as an application-specific integrated circuit. Such software may be distributed on a computer-readable medium, which may include a computer storage medium (or non-transitory medium) and a communication medium (or a transitory medium). Unless otherwise explicitly specified and defined, the terms such as "mounting", "connecting" and "connection" should be interpreted in a broad sense, for example, they may be a fixed connection, a detachable connection, or an integral connection; or may be a mechanical connection or an electrical connection; or may be a direct connection, an indirect connection by means of an intermediate medium, or internal communication between two elements. For those of ordinary skill in the art, the specific meaning of the terms mentioned above in the present application can be construed according to specific circumstances. As used in the specification and the appended claims of the present application, the singular forms "a", "an", and "the" are intended to include plural forms, unless otherwise explicitly specified in the context.

It should be further understood that the term "and/or" used in the specification and the appended claims of the present application indicates any combination and all possible combinations of one or more items listed in association, and includes the combinations. It should be noted that the term "comprise", "include", or any other variant thereof herein is intended to encompass a non-exclusive inclusion, such that a process, method, article, or system that includes a series of elements not only includes those elements.

## Claims

1. A binocular display method, which is applied to a binocular display device, **characterized in that** the binocular display device comprises a first display module and a second display module, between which a wireless communication connection is established, and the binocular display device is configured to display first binocular image information comprising first image information for display on the first display module and second image information for display on the second display module, the method comprising:
configuring the first image information on the first display module, and configuring the second image information on the second display module; and
controlling the first display module and the second display module to perform image information display synchronously, wherein the first display module displays the first image information, and the second display module displays the second image information.

2. The binocular display method according to claim 1, **characterized in that** the first display module is configured to receive the first binocular image information, and configuring the second image information on the second display module comprises:
controlling the first display module to transmit the second image information to the second display module.

3. The binocular display method according to claim 2, **characterized in that** controlling the first display module to transmit the second image information to the second display module comprises:
determining a first idle time slot in a wireless transmission channel between the first display module and the second display module; and
controlling the first display module to send the second image information to the second display module within the first idle time slot.

4. The binocular display method according to claim 3, **characterized in that** determining the first idle time slot in the wireless transmission channel between the first display module and the second display module comprises:
obtaining a data transmission time required for a preset data transmission over the wireless transmission channel; and
determining the first idle time slot from the wireless transmission channel, and controlling the first display module and the second display module to synchronize time slot information corresponding to the first idle time slot, wherein the first idle time slot has a time length greater than or equal to the data transmission time.

5. The binocular display method according to claim 4, **characterized in that** obtaining the data transmission time required for the preset data transmission over the wireless transmission channel comprises:
obtaining a transmission rate of the wireless transmission channel; and
determining the data transmission time based on the transmission rate of the wireless transmission channel and a data amount of preset data, wherein the preset data comprises the first image information and/or the second image information.

6. The binocular display method according to claim 4, **characterized in that** determining the first idle time slot from the wireless transmission channel comprises:
extracting, from the wireless transmission channel, at least one first candidate time slot that is idle and has a time length greater than or equal to the data transmission time, wherein different first candidate time slots correspond to different data transmission time points during data transmission from the first display module to the second display module; and
selecting, from among the at least one first candidate time slot, the first idle time slot that meets a preset data transmission condition.

7. The binocular display method according to claim 6, **characterized in that** the first idle time slot is the first candidate time slot that corresponds to the earliest data transmission time point during data transmission from the first display module to the second display module over the wireless transmission channel;
or the first idle time slot is the first candidate time slot corresponding to the shortest data transmission time during data transmission from the first display module to the second display module in the first candidate time slot.

8. The binocular display method according to claim 4, **characterized in that** controlling the first display module and the second display module to synchronize the time slot information corresponding to the first idle time slot comprises:
controlling the first display module to generate time slot feedback based on the time slot information of the first idle time slot, and outputting the time slot feedback to the second display module, such that the second display module performs a time slot information synchronization operation based on the time slot feedback.

9. The binocular display method according to claim 3, **characterized in that** controlling the first display module and the second display module to perform the image information display synchronously comprises:
controlling the first display module to display the first image information at an end time of the first idle time slot, and controlling the second display module to display the second image information at the end time of the first idle time slot;
or controlling the first display module to display the first image information at a preset time following the first idle time slot, and controlling the second display module to display the second image information at the preset time following the first idle time slot.

10. The binocular display method according to claim 1, **characterized in that** the binocular display device further comprises a master control module communicatively connected to the first display module and the second display module in a wireless manner, the master control module being configured to receive the first binocular image information, and configuring the first image information on the first display module, and configuring the second image information on the second display module comprise:
controlling the master control module to transmit the first image information to the first display module and the second image information to the second display module.

11. The binocular display method according to claim 10, **characterized in that** controlling the master control module to transmit the first image information to the first display module and the second image information to the second display module comprises:
determining a second idle time slot based on a first transmission channel between the master control module and the first display module and a second transmission channel between the master control module and the second display module, wherein the first transmission channel and the second transmission channel are both idle within the second idle time slot; and
controlling the master control module to send the first image information to the first display module and the second image information to the second display module within the second idle time slot.

12. The binocular display method according to claim 11, **characterized in that** determining the second idle time slot based on the first transmission channel between the master control module and the first display module and the second transmission channel between the master control module and the second display module comprises:
determining a third idle time slot in the first transmission channel;
determining a fourth idle time slot in the second transmission channel; and
determining the second idle time slot based on the third idle time slot and the fourth idle time slot, wherein the second idle time slot corresponds to an overlapping period between the third idle time slot and the fourth idle time slot.

13. The binocular display method according to claim 12, **characterized in that** determining the third idle time slot in the first transmission channel comprises:
obtaining a first transmission time required for a preset data transmission over the first transmission channel; and
determining the third idle time slot from the first transmission channel, wherein the third idle time slot has a time length greater than or equal to the first transmission time.

14. The binocular display method according to claim 13, **characterized in that** obtaining the first transmission time required for the preset data transmission over the first transmission channel comprises:
obtaining a transmission rate of the first transmission channel; and
determining the first transmission time based on the transmission rate of the first transmission channel and a data amount of preset data, wherein the preset data comprises the first image information and/or the second image information.

15. The binocular display method according to claim 14, **characterized in that** determining the third idle time slot from the first transmission channel comprises:
extracting, from the first transmission channel, at least one second candidate time slot that is idle and has a time length greater than or equal to the first transmission time, wherein different second candidate time slots correspond to different data transmission time points during data transmission by the master control module; and
selecting, from among the at least one second candidate time slot, the third idle time slot that meets a preset data transmission condition.

16. The binocular display method according to any one of claims 1 to 15, **characterized in that** configuring the first image information on the first display module comprises:
controlling the first display module to obtain the first image information from a predetermined terminal device through at least one of wireless communication and wired communication;
and/or
configuring the second image information on the second display module comprises:
controlling the second display module to obtain the second image information from a predetermined terminal device through at least one of wireless communication and wired communication.

17. The binocular display method according to any one of claims 1 to 15, **characterized in that** controlling the first display module and the second display module to perform the image information display synchronously comprises:
controlling the first display module and the second display module to synchronize a display time instant, wherein the display time instant follows the completion of the configuration of the first image information and the second image information; and
controlling the first display module to display the first image information at the display time instant, and controlling the second display module to display the second image information at the display time instant.

18. The binocular display method according to any one of claims 1 to 15, **characterized in that** controlling the first display module and the second display module to perform the image information display synchronously comprises:
controlling, after at least one of the first display module and the second display module receives a display instruction matching the first binocular image information, the first display module and the second display module to synchronize a display time instant based on the display instruction, wherein the display time instant follows the completion of the configuration of the first image information and the second image information; and
controlling the first display module to display the first image information at the display time instant, and controlling the second display module to display the second image information at the display time instant.

19. The binocular display method according to claim 18, **characterized by** further comprising:
performing detection on display instructions respectively received by the first display module and the second display module; and
skipping controlling the first display module and the second display module to perform image information display synchronously if the display instructions respectively received by the first display module and the second display module do not match.

20. The binocular display method according to any one of claims 1 to 15, **characterized in that** a target display module is switchable between a first operating mode and a second operating mode, wherein communication performance of the target display module in the first operating mode is higher than that in the second operating mode, and the target display module comprises at least one of the first display module and the second display module; and
the method further comprises:
configuring a current operating mode of the target display module to be the first operating mode or the second operating mode based on an information attribute of the first binocular image information before configuring the first image information and the second image information.

21. The binocular display method according to claim 20, **characterized in that** the information attribute comprises an information capacity value, and configuring the current operating mode of the target display module to be the first operating mode or the second operating mode based on the information attribute of the first binocular image information comprises:
determining whether the information capacity value of the first binocular image information exceeds a preset value; and
configuring the current operating mode of the target display module to be the first operating mode when the information capacity value of the first binocular image information exceeds the preset value; or
configuring the current operating mode of the target display module to be the second operating mode when the information capacity value of the first binocular image information does not exceed the preset value.

22. The binocular display method according to claim 21, **characterized by** further comprising:
controlling, after the target display module in the second operating mode has configured corresponding image information, the target display module to switch the second operating mode to the first operating mode.

23. The binocular display method according to any one of claims 1 to 15, **characterized by** further comprising:
receiving second binocular image information including third image information for display on the first display module and fourth image information for display on the second display module, the third image information being displayed after the first image information, and the fourth image information being displayed after the second image information;
determining a fifth idle time slot, and configuring the third image information on the first display module and the fourth image information on the second display module within the fifth idle time slot, wherein the fifth idle time slot follows the first idle time slot; and
controlling the first display module and the second display module to perform image information display synchronously, wherein the first display module displays the third image information, and the second display module displays the fourth image information.

24. The binocular display method according to any one of claims 1 to 15, **characterized by** further comprising:
obtaining pose information of the binocular display device; and
controlling the first display module and/or the second display module to perform image compensation on the first image information and the second image information based on the pose information, such that the first display module and the second display module synchronously display image information after the image compensation.

25. The binocular display method according to claim 24, **characterized by** further comprising:
controlling the first display module to obtain the pose information, and controlling the first display module to perform the image compensation on the first image information based on the pose information; and
controlling the first display module to send the pose information to the second display module, such that the second display module performs the image compensation on the second image information based on the pose information.

26. The binocular display method according to claim 24, **characterized by** further comprising:
controlling the second display module to obtain the pose information, and controlling the second display module to perform the image compensation on the second image information based on the pose information; and
controlling the second display module to send the pose information to the first display module, such that the first display module performs the image compensation on the first image information based on the pose information.

27. The binocular display method according to claim 24, **characterized in that** the binocular display device further comprises a master control module communicatively connected to the first display module and the second display module in a wireless manner, and the method further comprises:
controlling the master control module to obtain the pose information, and controlling the second display module to perform the image compensation on the first image information and the second image information based on the pose information; and
sending the compensated first image information to the first display module, and sending the compensated second image information to the second display module.

28. A binocular display device, **characterized by** comprising a first display module and a second display module communicatively connected to the first display module in a wireless manner, wherein
the binocular display device is further provided with a controller configured to control the binocular display device to perform the binocular display method according to any one of claims 1 to 27.

29. The binocular display device according to claim 28, **characterized by** further comprising a frame assembly, an optical waveguide lens, and a power supply component,
wherein the frame assembly is at least configured to provide wearing support, and the first display module and the second display module are mounted in the frame assembly;
the optical waveguide lens is mounted on the frame assembly, and the optical waveguide lens is provided with coupled-in grating regions and coupled-out grating regions, the coupled-in grating regions being disposed opposite to the first display module and the second display module, wherein image signals input into the coupled-in grating regions pass through the optical waveguide lens and are output from the coupled-out grating regions; and
the power supply component is mounted on the frame assembly, and is configured to supply power to the first display module and the second display module.

30. The binocular display device according to claim 29, **characterized in that** the controller comprises a first control module and a second control module, wherein a wireless communication connection is established between the first control module and the second control module, the first control module is provided in the first display module and configured to control the first display module to output image information, and the second control module is provided in the second display module and configured to control the second display module to output image information.

31. The binocular display device according to claim 30, **characterized in that** the controller comprises a master control module, wherein the master control module is communicatively connected to the first control module and the second control module in a wireless manner.
